# EUROPÄISCHE PATENTSCHRIFT

(11) **EP 2 681 031 B1**
(45) Veröffentlichungstag und Bekanntmachung des Hinweises auf die Patenterteilung: **13.04.2016**
(21) Anmeldenummer: 12712902.1
(22) Anmeldetag: 17.02.2012
(51) Int. Cl.: B29C 49/42, B65G 51/03, B29C 49/36, B29C 49/12, B29K 67/00

(54) **VERFAHREN UND VORRICHTUNG ZUR HANDHABUNG VON VORFORMLINGEN**
METHOD AND APPARATUS FOR PANDLING PARISONS
PREOCEDE ET DISPOSITIF DE MANIPULATION DE PARAISONS

(30) Priorität: 03.03.2011 DE 102011013471
(43) Veröffentlichungstag der Anmeldung: 08.01.2014
(73) Patentinhaber: KHS Corpoplast GmbH & Co. KG, 22145 Hamburg (DE)
(72) Erfinder: HELLER, Alexander, 22941 Bargteheide (DE); HOLLER, Dieter, 23843 Rümpel (DE); LINKE, Michael, 22159 Hamburg (DE); BAUMGARTE, Rolf, 22926 Ahrensburg (DE); LEWIN, Frank, 22889 Tangstedt (DE)
(74) Vertreter: Hausfeld, Norbert
(86) Internationale Anmeldenummer: PCT/DE2012/000191
(87) Internationale Veröffentlichungsnummer: WO 2012/116684

(56) Entgegenhaltungen:
- WO-A1-90/10587
- WO-A1-2006/058511
- US-A- 5 299 889

## Beschreibung

Die Erfindung betrifft ein Verfahren zur Handhabung von Vorformlingen, die mit einem Staudruck einer Einrichtung zur Blasformung von Behältern zugeführt werden, in der die Vorformlinge nach einer thermischen Konditionierung innerhalb mindestens einer Blasform von einer Reckstange gereckt und durch Blasdruckeinwirkung in Behälter umgeformt werden sowie bei dem die Vorformlinge zur Ausbringung einer Vorschubkraft mit mindestens einer ersten Gasströmung beaufschlagt werden, wobei der Staudruck der Vorformlinge in einem Eingangsbereich der Einrichtung erzeugt wird,

Die Erfindung betrifft darüber hinaus eine Vorrichtung zur Handhabung von Vorformlingen, die mit einem Staudruck einer Einrichtung zur Blasformung von Behältern zugeführt werden, bei der entlang einer Führungseinrichtung für die Vorformlinge mindestens eine Ausströmöffnung für eine die Vorformlinge mit einer Vorschubkraft beaufschlagenden ersten Gasströmung angeordnet ist, wobei der Staudruck der Vorformlinge im Eingangsbereich der Einrichtung erzeugt wird.

Bei einer Behälterformung durch Blasdruckeinwirkung werden Vorformlinge aus einem thermoplastischen Material, beispielsweise Vorformlinge aus PET (Polyethylenterephthalat), innerhalb einer Blesmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-0S 43 40 291 erläutert.

Der grundsätzliche Aufbau einer Blasstation zur Behälterformung wird in der DE-OS 42 12 583 beschrieben, Möglichkeiten zur Temperierung der Vorformlinge werden in der DE-0S 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die Vorformlinge werden der Blasmaschine typischerweise über Förderschienen zugeführt, entlang derer die Vorformlinge in einer räumlichen Orientierung mit Mündungsbereichen nach oben entlanggleiten. Eine Führung der Vorformlinge sowie eine Abstützung der Vorformlinge erfolgt typischerweise unter Verwendung von Stützringen, die unterhalb eines Gewindes der Vorformlinge angeordnet sind.

Entlang der Zuführschienen gleiten die Vorformlinge aufgrund der Einwirkung der herrschenden Schwerkraft. Um bei Blasmaschinen mit einer hohen Produktionskapazität eine zuverlässige Zuführung der Vorformlinge zu gewährleisten, werden relativ lange Zuführschienen verwendet, um trotz der bei einer Bewegung der Vorformlinge entlang der Führungsschienen auftretenden Reibungskräfte einen ausreichenden Staudruck der Vorformlinge im Eingangsbereich zur Blasmaschine zu erreichen. Die erforderliche Länge der Zuführschiene führt zu erheblichen Bauhöhen, die es erforderlich machen, zur Versorgung der Zuführschienen verwendete Steilförderer entweder ebenfalls mit einer großen Höhendimensionierung zu versehen oder diese auf speziellen Gestellen anzuordnen.

In der WO 2006/058511 wird, entsprechend den Oberbegriffen der Ansprüche 1 und 9, bereits eine Transporteinrichtung für Vorformlinge beschrieben, bei der die Vorschubkraft für die Vorformlinge durch eine Gasströmung generiert wird. Es zeigte sich jedoch, dass aufgrund von Reibungskräften zwischen den Vorformlingen und den Führungsschienen erhebliche Volumenströme an Gas erforderlich sind, um die benötigten Vorschubkräfte zu generieren.

Aufgabe der vorliegenden Erfindung ist es, ein Verfahren der einleitend genannten Art derart zu verbessern, dass eine Zuführung der Vorformlinge zur Blasmaschine auch bei großen Fördermengen zuverlässig und mit geringen Kosten erfolgen kann.

Diese Aufgabe wird erfingdungsgemäß dadurch gelöst, dass die Vorformlingen von mindestens einer zweiten Gasströmung derart beaufschlagt werden, dass eine Strömung schräg zu einer Längsachse der Vorformlinge und mit einer Ausbreitungskomponente entgegen der Schwerkraft in Richtung auf einen Mündungsabschnitt der Vorformlinge verläuft, wobei die erste und die zweite Gasströmung unabhängig voneinander steuerbar sind.

Weitere Aufgabe der vorliegenden Erfindung ist es, eine Vorrichtung der einleitend genannten Art derart zu konstruieren, dass bei geringen Kosten eine hohe Funktionalität gewährleistet ist.

Diese Aufgabe wird erfindungsgemäß dadurch gelöst, dass entlang der Führungseinrichtung mindestens eine weitere Ausströmöffnung für eine zweite die Vorformlinge mit einer Auftriebskraft beaufschlagende zweite Gasströmung angeordnet ist, wobei die Ausströmöffnung als Öffnung eines Strömungskanals ausgebildet ist, der sich mindestens teilsweise schräg zu einer Längsachse der Vorformlinge und mit einer Ausbreitungskomponente in Richtung auf einen Mündungsabschnitt der Vorformlingen erstreckt, wobei eine die erste Gasströmung bereitstellende erste Gasströmungsquelle und eine die zweite Gasströmung bereitstellende zweite Gasströmungsquelle unabhängig voneinander steuerbar sind.

Durch die zweite Gasströmung wird die Reibung der Vorformlinge entlang der Führungseinrichtung wesentlich vermindert. Die zweite Gasströmung wird dabei derart eingestellt, dass die Vorformlingen noch ausreichend sicher auf der Führungseinrichtung aufliegen, andererseits aber nur noch eine geringe Reibung erzeugt wird.

Insbesondere zeigt es sich, dass durch die Kombination der einwirkenden Gasströme nicht nur ein Vortrieb korrekt ausgerichteter Vorformlingen hervorgerufen wird, sondern dass noch nicht mit ihren Längsachsen in einer lotrechten Richtung und mit den Mündungsabschnitten in lotrechter Richtung nach oben ausgerichtete Vorformlinge derart in geeigneter Weise durch die Gasströmungen gedreht und verschoben werden, dass die ordnungsgemäße Ausrichtung mit den Mündungsabschnitten in lotrechter Richtung nach oben und den Vorformlingslängsachsen in einer vertikalen Richtung erreicht wird. Die Vorrichtung übt somit zumindest abschnittsweise auch die Funktion einer Sortiervorrichtung für die Vorformlinge aus.

Die Handhabung der Vorformlinge kann insbesondere ein Transport und/oder ein Sortieren der Vorformlinge sein.

Zur mindestens teilweisen Kompensation der Schwerkrafteinwirkung auf die Vorformlinge wird vorgeschlagen, dass die Vorformlinge mit ihren Längsachsen in einer im Wesentlichen vertikalen Richtung ausgerichtet werden.

Eine voneinander unabhängig Beeinflussung von Vortriebskräften und anhebenden Kräften wird erfindungsgemäß dadurch erreicht, dass die erste und die zweite Gasströmung unabhängig voneinander steuerbar sind.

Eine weitere Verbesserung der Funktionalität wird dadurch erreicht, dass die erste Gasströmung in eine bezüglich einer Transportrichtung der Vorformlinge linke und rechte Gasströmung unterteilt ist.

Insbesondere ist daran gedacht, dass die linke und die rechte Gasströmung unabhängig voneinander steuerbar sind.

Zur Unterstützung einer Sortierfunktion beziehungsweise zur weiteren Verminderung einer Reibung wird vorgeschlagen, dass die zweite Gasströmung in eine bezüglich der Transportrichtung der Vorformlinge linke und rechte Gasströmung unterteilt ist.

Insbesondere ist daran gedacht, dass die linke und die rechte Gasströmung unabhängig voneinander steuerbar sind.

Für eine zuverlässige und zugleich reibungsarme Führung der Vorformlinge ist vorgesehen, dass die Vorformlinge mit Stützringen entlang von Tragschienen geführt werden.

Eine weitere Verminderung auftretender Reibungen kann dadurch erreicht werden, dass die Vorformlinge in einem Sortierbereich von schräg in Richtung auf einen Transportkanal ausgerichteten Leitflächen ausgerichtet werden.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine perspektivische Darstellung der Transport- und Sortiereinrichtung und
- Fig. 6: einen Querschnitt der Transport- und Sortiereinrichtung gemäß Fig. 5.

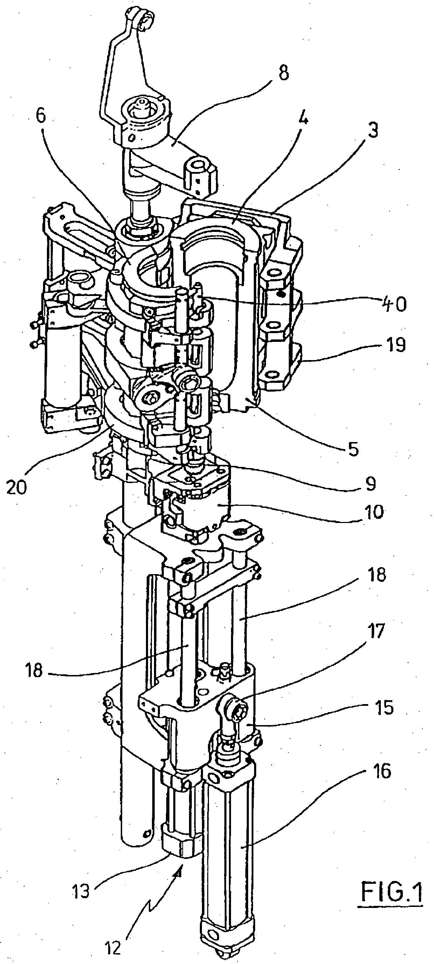

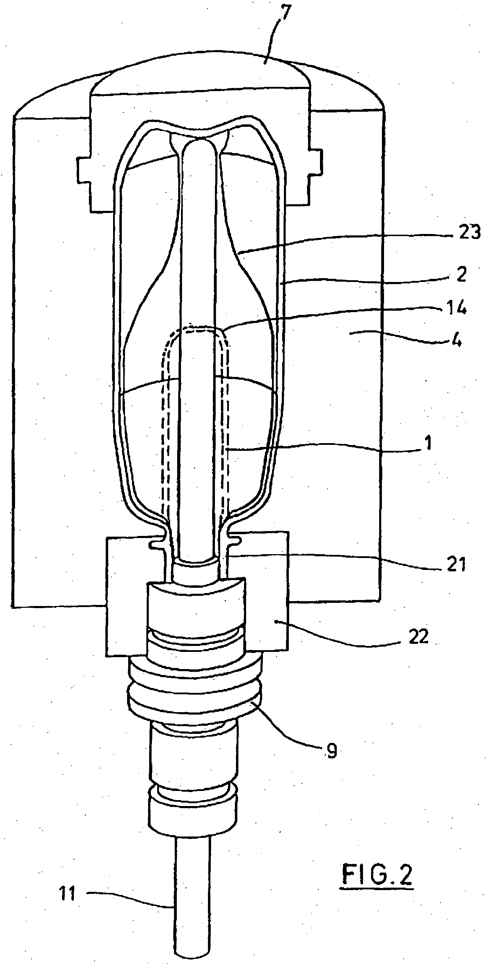

Die Vorrichtung zum Sortieren und/oder zum Transport von Vorformlingen (1) führt die Vorformlinge (1) direkt oder bei Verwendung weiterer Transporteinrichtungen einer Blasmaschine zu, die als eine Vorrichtung zur Umformung von Vorformlingen (1) in Behälter (2) ausgebildet ist und deren prinzipieller Aufbau in Fig. 1 und in Fig. 2 veranschaulicht ist.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.

Bei der in Fig. 1 dargestellten Ausführungsform ist das Recksystem derart ausgebildet, dass eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, dass von einer Führungsrolle (17), die während der Durch-führung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

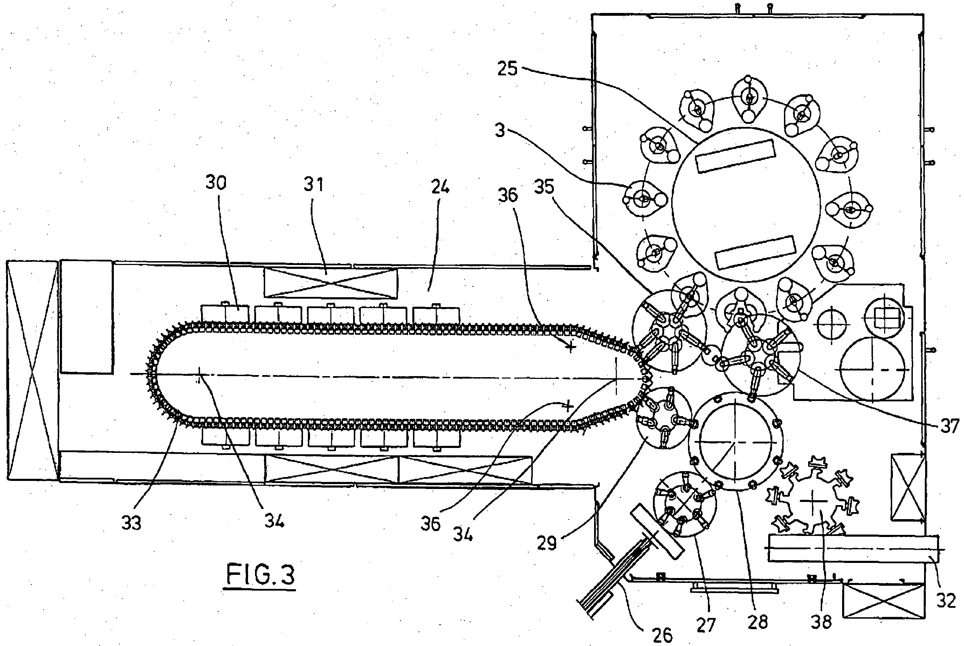

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, dass der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

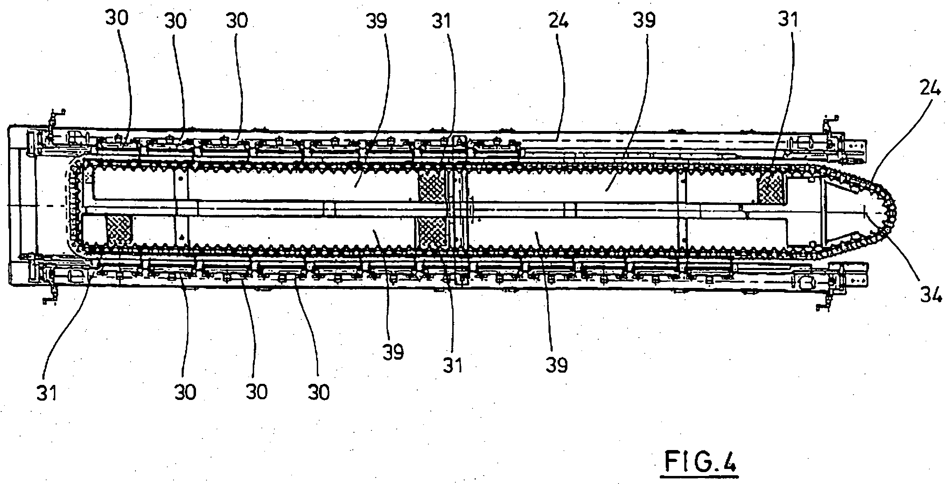

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

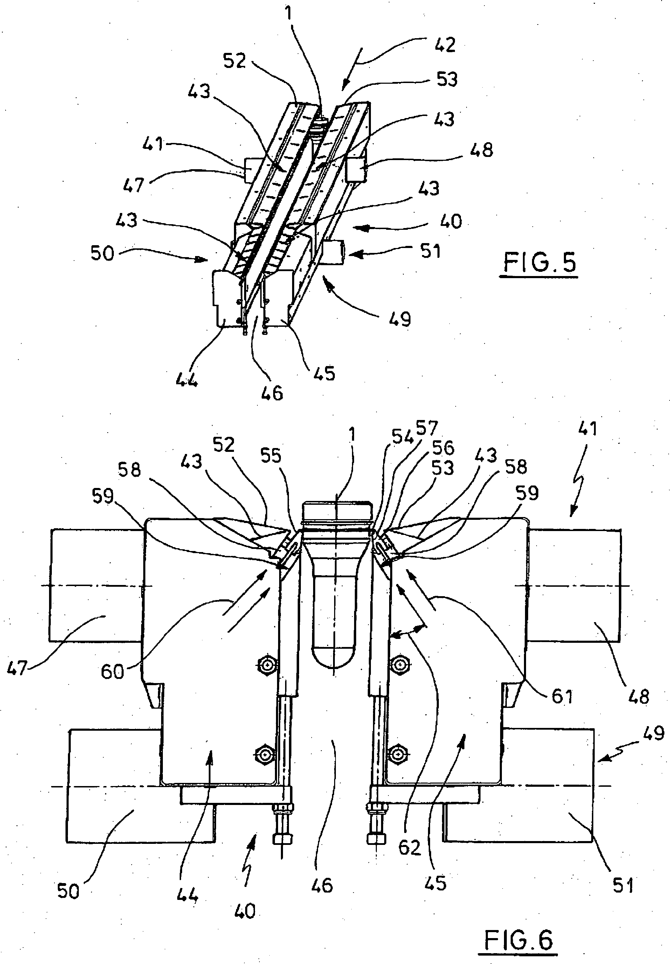

Fig. 5 zeigt eine perspektivische Darstellung einer Vorrichtung zum Sortieren sowie zur Förderung von Vorformlinggen (1), die mit der Vorrichtung zur Blasformung von Behältern (2) verbunden werden kann. Die Vorrichtung zum Transport von Vorformlingen (1) weist eine Förderstrecke (40) auf, die mit mindestens einer ersten Gasströmungsquelle (41) gekoppelt ist. Die Gasströmungsquelle (41) kann beispielsweise als ein Gebläse ausgebildet sein. Bei der in Fig. 5 dargestellten Ausführungsform erstreckt sich die Förderstrecke (40) im wesentlichen in einer horizontalen oder geneigten Richtung.

Die Vorformlinge (1) werden in einer Transportrichtung (42) entlang der Förderstrecke (40) bewegt. Die erste Gasströmungsquelle (41) ist über einen oder mehrere Strömungskanäle mit Ausströmöffnungen (43) verbunden, die das von der ersten Gasströmungsquelle (41) bereitgestellte Druckgas derart in Richtung auf die Vorformlinge (1) leiten, dass diese mit einer Vortriebskraft in Transportrichtung (42) beaufschlagt werden.

Gemäß dem Ausführungsbeispiel in Fig. 5 weist die Förderstrecke (40) linke und rechte Strömungsprofile (40, 45) auf. Zwischen den Strömungsprofilen (44, 45) ist ein Transportkanal (46) für die Vorformlinge (1) angeordnet. Typischerweise ist die erste Gasströmungsquelle (41) aus einer ersten linken sowie einer ersten rechten Teilquelle (47, 48) ausgebildet. Die Teilquellen (47, 48) können unabhängig voneinander steuerbar bzw. regelbar sein.

Die Förderstrecke (40) weist darüber hinaus mindestens eine zweite Gasströmungsquelle (49) auf. Die Gasströmungsquelle (49) beaufschlagt die Vorformlinge (1) derart mit ausströmendem Gas, dass eine Kraftwirkung entgegen der Schwerkraft generiert wird. Vorzugsweise besteht die zweite Gasströmungsquelle (49) aus linken und rechten Teilquellen (50, 51). Ebenfalls bevorzugt sind die Teilquellen (50, 51) unabhängig von einander steuerbar bzw. regelbar.

Fig. 5 veranschaulicht ebenfalls, dass die Förderstrecke (40) in Transportrichtung (42) zunächst im Bereich der in lotrechter Richtung oberen Begrenzung der Strömungsprofile (40, 45) Leitflächen (52, 53) aufweist, die in Richtung auf den Transportkanal (46) geneigt sind. Diese Konstruktion unterstützt eine Einfädelung noch nicht mit ihren Längsachsen in lotrechter Richtung ausgerichteter Vorformlinge (1).

Fig. 6 veranschaulicht den Aufbau der Förderstrecke (40) in einer stärker detaillierten Querschnittdarstellung. Es ist zu erkennen, dass der Vorformling (1) mit einem Stützring (54) auf Tragschienen (55, 56) aufliegt.

Zur Gewährleistung einer möglichst reibungsarmen Führung der Vorformlinge (1) sind die Tragschienen (55, 56) im Bereich ihrer dem Vorformling (1) zugewandten Ausdehnung mit einer Anschrägung (57) versehen. Insbesondere wird hierdurch bei einem seitlichen Verkippen der Vorformlinge (1) ein Festklemmen vermieden.

Gemäß dem Ausführungsbeispiel in Fig. 6 erstrecken sich sowohl oberhalb als auch unterhalb der Tragschienen (55, 56) jeweils Ausströmkanäle (58, 59). Die Ausströmkanäle (58, 59) sind mit der zweiten Gasströmungsquelle (49) verbunden. Längsrichtungen der Ausströmungskanäle (58, 59) definieren Hauptströmungsrichtungen (60, 61) für die den Vorformling (1) entgegen der Schwerkrafteinwirkung beaufschlagenden Gasströmungen. Die Hauptströmungsrichtungen (60, 61) sind relativ zu einer vertikalen Richtung mit einem Winkel (62) in einem Bereich von 20° bis 70° ausgerichtet. Das dargestellte Beispiel zeigt einen Winkel (62) von etwa 35°.

Alternativ oder ergänzend zur Verwendung von eigenständigen Gasströmungsquellen (41, 49) in Form von Gebläsen oder Verbindungen zu einer Druckgasversorgung ist es auch möglich, für den Vortrieb der Vorformlinge und/oder für die Generierung der die Vorformlinge anhebenden Kräfte verbrauchte Blasluft der Blasmaschine zu verwenden, die nach einer Ausformung der Behälter (2) aus den Blasstationen (3) abgelassen wird. Hierdurch läßt sich der Gesamtenergieverbrauch verringern.

## Patentansprüche

1. Verfahren zur Handhabung von Vorformlingen (1), die mit einem Staudruck einer Einrichtung zur Blasformung von Behältern (2) zugeführt werden, in der die Vorformlinge (1) nach einer thermischen Konditionierung innerhalb mindestens einer Blasform (4) von einer Reckstange (11) gereckt und durch Blasdruckeinwirkung in Behälter (2) umgeformt werden, sowie bei dem die Vorformlinge (1) zur Aufbringung einer Vorschubkraft mit mindestens einer ersten Gasströmung beaufschlage werden, wobei der Staudruck der Vorformlinge (1) im Eingangsbereich der Einrichtung erzeugt wird, **dadurch gekennzeichnet, dass** die Vorformlinge (1) von mindestens einer zweiten Gasströmung derart beaufschlagt werden, dass eine Strömung schräg zu einer Längsachse der Vorformlinge (1) und mit einer Ausbreitungskomponente entgegen der Schwerkraft in Richtung auf einen Mundungsabschnitt (21) der Vorformlinge (1) vertäuft, wobei die erste und die zweite Gasströmung unabhängig voneinander steuerbar sind.

2. Verfahren nach Anspruch 1, **dadurch gekennzeichnet, dass** die Vorformlinge mit ihren Längsachsen in einer im Wesentlichen vertikalen Richtung ausgerichtet werden.

3. Verfahren nach einem der Ansprüche 1 oder 2, **dadurch gekennzeichnet, dass** die erste Gasströmung in eine bezüglich einer Transportrichtung (42) der Vorformlinge (1) linke und rechte Gasströmung unterteilt ist.

4. Verfahren nach Anspruch 3, **dadurch gekennzeichnet, dass** die linke und die rechte Gasströmung unabhängig voneinander steuerbar sind.

5. Verfahren nach einem der Ansprüche 1 bis 4, **dadurch gekennzeichnet, dass** die zweite Gasströmung in eine bezüglich der Transportrichtung (42) der Vorformlinge linke und rechte Gasströmung unterteilt ist.

6. Verfahren nach Anspruch 5, **dadurch gekennzeichnet dass** die linke und die rechte Gasströmung unabhängig voneinander steuerbar sind.

7. Verfahren nach einem der Ansprüche 1 bis 6, **dadurch gekennzeichnet, dass** die Vorformling (1) mit Stützringen (54) entlang von Tragschienen (55, 56) geführt werden.

8. Verfahren nach einem der Ansprüche 1 bis 7. **dadurch gekennzeichnet, dass** die Vorformlingen in einem Sortierbereich von schräg in Richtung auf einen Transportkanal (46) ausgerichteten Leitflächen (52, 53) ausgerichtet werden.

9. Vorrichtung zur Handhabung von Vorformlingen (1), die mit einem Staudruck einer Einrichtung zur Blasformung von Behältern (2) zugeführt werden, bei der Entlang einer Führungseinrichtung für die Vorformlinge (1) mindestens eine Ausströmöffnung (43) für eine die Vorformlinge (1) mit einer Vorschubkraft beaufschlagenden ersten Gasströmung angeordnet ist, wobei der Staudruck der Vorformlinge (1) im Eingangsbereich der Einrichtung erzeugt wird, **dadurch gekennzeichnet, dass** entlang der Führungseinrichtung mindestens eine weitere Ausströmöffnung für eine zweite die Vorformlinge (1) mit einer Auftriebskraft beaufschlagende zweite Gasströmung angeordnet ist, wobei die Ausströmöffnung als Öffnung eines Strömungskanals ausgebildet ist, der sich mindestens teilweise schräg zu einer Längsachse der Vorformlinge (1) und mit einer Ausbreitungskomponente in Richtung auf einen Mündungsabschnitt (21) der Vorformling (1) erstreckt, wobei eine die erste Gasströmung bereitstellende erste Gasströmungsquelle (41) und eine die zweite Gasströmung bereitstellende zweite Gasströmungsquelle (49) unabhängig voneinander steuerbar sind.

10. Vorrichtung nach Anspruch 9, **dadurch gekennzeichnet, dass** die erste Gasströmungsquelle (41) aus einer relativ zur Transportrichtung (42) der Vorformlinge (1) linke und rechte Teilquelle (47,48) ausgebildet ist.

11. Vorrichtung nach Anspruch 10, **dadurch gekennzeichnet, dass** die Teilquellen (47, 48) unabhängig voneinander steuerbar sind.

12. Vorrichtung nach Anspruch 9, **dadurch gekennzeichnet, dass** die zweite Gasströmungsquelle (49) aus einer relativ zur Transportrichtung (42) der Vorformlinge (1) linke und rechte Teilquelle (47, 48) ausgebildet ist.

13. Vorrichtung nach Anspruch 12, **dadurch gekennzeichnet, dass** die Teilquellen (47, 48) unabhängig voneinander steuerbar sind.

## Claims

1. A method for handling preforms (1), which are fed by means of a dynamic pressure to a device for blow-moulding containers (2), in which the preforms (1) are drawn within at least one blow mould (4) after a thermal conditioning by means of a drawing rod (11) and are shaped into containers (2) under the effect of blowing pressure, and in the case of which at least a first gas flow is applied to the preforms (1) for applying a feed force, wherein the dynamic pressure of the preforms (1) is generated in the entrance area of the device, **characterised in that** at least a second gas flow is applied to the preforms (1) such that a flow runs obliquely to a longitudinal axis of the preforms (1) and with a propagation component opposite the force of gravity in the direction of the mouth portion (21) of the preforms (1), wherein the first and the second gas flow can be controlled independent from one another.

2. The method according to claim 1, **characterised in that** the preforms are oriented with their longitudinal axes in a substantially vertical direction.

3. The method according to any one of claims 1 or 2, **characterised in that** the first gas flow is divided into a left and right gas flow with relative to a transport direction (42) of the preforms (1).

4. The method according to claim 3, **characterised in that** the left and the right gas flow can be controlled independently from one another.

5. The method according to any one of claims 1 to 4, **characterised in that** the second gas flow is divided into a left and right gas flow relative to the transport direction (42) of the preforms.

6. The method according to claim 5, **characterised in that** the left and the right gas flow can be controlled independently from one another.

7. The method according to any one of claims 1 to 6, **characterised in that** the preforms (1) are guided along bearing rails (55, 56) by means of support rings (54).

8. The method according to any one of claims 1 to 7, **characterised in that**, in a sorting area, the preforms are oriented by guide surfaces (52, 63), which are oriented obliquely in the direction of a transport channel (46).

9. A device for handling preforms (1), which are fed by means of a dynamic pressure to a device for blow-moulding containers (2), in which at least one outflow opening (43) for a first gas flow, which applies a feed force to the preforms (1), is arranged along a guide device for the preforms (1), wherein the dynamic pressure of the preforms (1) is generated in the entrance area of the device, **characterised in that** at least one further outflow opening for a second gas flow, which applies a lifting force to the preforms (1), is arranged along the guide device, wherein the outflow opening is embodied as opening of a flow channel, which extends at least partially obliquely to a longitudinal axis of the preforms (1) and with a propagation component in the direction of a mouth portion (21) of the preforms (1), wherein a first gas flow source (41), which provides the first gas flow, and a second gas flow source (49), which provides the second gas flow, can be controlled independently from one another.

10. The device according to claim 9, **characterised in that** the first gas flow source (41) is formed from a left and right partial source (47, 48) relative to the transport direction (42) of the preforms (1).

11. The device according to claim 10, **characterised in that** the partial sources (47, 48) can be controlled independently from one another.

12. The device according to claim 9, **characterised in that** the second gas flow source (49) is formed from a left and right partial source (47, 46) relative to the transport direction (42) of the preforms (1).

13. The device according to claim 12, **characterised in that** the partial sources (47, 48) can be controlled independently from one another.

## Revendications

1. Procédé de manipulation de préformes (1), lesquelles sont amenées avec une contre-pression vers une installation de moulage par soufflage de récipients (2) dans laquelle les préformes (1), après un conditionnement thermique, sont étirées par une barre d'étirage (11) à l'intérieur d'au moins un moule de soufflage (4) et, sous l'action d'une pression de soufflage, transformées en récipients (2), et dans le cadre duquel les préformes (1), pour y appliquer une force d'avance, sont soumises à l'action d'au moins un premier courant de gaz, la contre-pression des préformes (1) étant générée au niveau de l'entrée de l'installation, **caractérisé en ce que** les préformes (1) sont soumises à l'action d'au moins un second courant de gaz de façon telle qu'un courant de direction oblique par rapport à un axe longitudinal des préformes (1) et présentant une composante opposée à la pesanteur soit dirigé vers une section d'embouchure (21) des préformes (1), le premier et le second courant de gaz pouvant être réglés indépendamment l'un de l'autre.

2. Procédé selon la revendication 1, **caractérisé en ce que**
les préformes sont orientées avec leur axe longitudinal selon une direction essentiellement verticale.

3. Procédé selon l'une des revendications 1 ou 2, **caractérisé en ce que** le premier courant de gaz est divisé en un courant de gaz gauche et un courant de gaz droit par rapport au sens de transport (42) des préformes (1).

4. Procédé selon la revendication 3, **caractérisé en ce que** le courant de gaz gauche et le courant de gaz droit peuvent être réglés indépendamment l'un de l'autre.

5. Procédé selon l'une des revendications 1 à 4, **caractérisé en ce que** le second courant de gaz est divisé en un courant de gaz gauche et un courant de gaz droit par rapport au sens de transport (42) des préformes (1).

6. Procédé selon la revendication 5, **caractérisé en ce que** le courant de gaz gauche et le courant de gaz droit peuvent être réglés indépendamment l'un de l'autre.

7. Procédé selon l'une des revendications 1 à 6, **caractérisé en ce que** les préformes (1) sont guidées le long des rails supports (55, 56) par des bagues d'appui (54).

8. Procédé selon l'une des revendications 1 à 7, **caractérisé en ce que**, dans une zone de triage, les préformes sont alignées par des surfaces de guidage (52, 53) inclinées vers un canal de transport (46).

9. Dispositif de manipulation de préformes (1), lesquelles sont amenées avec une contre-pression vers une installation de moulage par soufflage de récipients (2) dans laquelle est agencé, le long d'un dispositif de guidage des préformes (1), au moins un orifice de sortie (43) pour un premier courant de gaz appliquant une force d'avance sur les préformes (1), la contre-pression des préformes (1) étant générée au niveau de l'entrée de l'installation, **caractérisé en ce qu'**est agencé, le long du dispositif de guidage, au moins un autre orifice de sortie pour un second courant de gaz appliquant une force ascensionnelle sur les préformes (1), l'orifice de sortie étant réalisé sous forme d'ouverture d'un canal d'écoulement qui, en partie au moins, est incliné par rapport à un axe longitudinal des préformes (1) et s'étend avec une composante vers une section d'embouchure (21) des préformes (1), une première source (41) d'un premier courant de gaz et une seconde source (49) d'un second courant de gaz pouvant être commandées indépendamment l'une de l'autre.

10. Dispositif selon la revendication 9, **caractérisé en ce que** la première source de courant de gaz (41) est formée par une source partielle gauche et une source partielle droite (47, 48) par rapport au sens de transport (42) des préformes (1).

11. Dispositif selon la revendication 10, **caractérisé en ce que** les sources partielles (47, 48) peuvent commandées indépendamment l'une de l'autre.

12. Dispositif selon la revendication 9, **caractérisé en ce que** la seconde source de courant de gaz (49) est formée par une source partielle gauche et une source partielle droite (47, 48) par rapport au sens de transport (42) des préformes (1).

13. Dispositif selon la revendication 12, **caractérisé en ce que** les sources partielles (47, 48) peuvent commandées indépendamment l'une de l'autre.
